# EUROPÄISCHE PATENTSCHRIFT

(11) **EP 1 753 295 B1**
(45) Veröffentlichungstag und Bekanntmachung des Hinweises auf die Patenterteilung: **19.08.2009**
(21) Anmeldenummer: 05707214.2
(22) Anmeldetag: 02.02.2005
(51) Int. Cl.: A22C 25/16

(54) **VORRICHTUNG UND VERFAHREN ZUM ENTFERNEN VON FLEISCHGRÄTEN AUS EINEM FISCHFILET**
DEVICE AND METHOD FOR THE REMOVAL OF PINBONES FROM A FISH FILLET
DISPOSITIF ET PROCEDE POUR RETIRER LES ARETES D'UN FILET DE POISSON

(30) Priorität: 12.05.2004 DE 102004024585
(43) Veröffentlichungstag der Anmeldung: 21.02.2007
(73) Patentinhaber: Nordischer Maschinenbau Rud. Baader GmbH + Co. KG, 23560 Lübeck (DE)
(72) Erfinder: GRABAU, Thomas, 23564 Lübeck (DE)
(74) Vertreter: Wenzel & Kalkoff
(86) Internationale Anmeldenummer: PCT/EP2005/001169
(87) Internationale Veröffentlichungsnummer: WO 2005/115156

(56) Entgegenhaltungen:
- WO-A-92/12641
- WO-A-99/41991
- US-A- 5 525 101
- US-A- 5 911 621
- US-A- 5 947 808

## Beschreibung

Die Erfindung betrifft eine Vorrichtung zum Entfernen von Fleischgräten aus einem Fischfilet, im wesentlichen umfassend mindestens ein Element zum Lösen und vollständigen Entfernen der Fleischgräten aus dem Fischfilet. Des weiteren betrifft die Erfindung ein Verfahren zum Entfernen von Fleischgräten aus einem Fischfilet durch Lösen und vollständiges Entfernen der Fleischgräten aus dem Fischfilet.

Derartige Vorrichtungen und Verfahren sind bei der Filetierung geschlachteter und vorzugsweise in ihrer Bauchhöhle geöffneter Fische, insbesondere zur Massenverarbeitung bestimmter Zuchtfische wie Salmoniden, die im Bereich der Wirbelsäule sich von der Wirbelsäule oder der oberen Strahlengräte beidseitig in die Filets erstreckende Fleischgräten, die so genannten Pinbones, aufweisen, im Einsatz. Die Vorrichtungen und Verfahren des Standes der Technik finden sowohl im Bereich der Frischfisch-Fischerei als auch im Bereich der Fischerei, in dem die Fische bereits auf hoher See bearbeitet werden, Anwendung.

Aus dem Stand der Technik ist es bekannt, die Pinbones bei der Filetgewinnung von der Wirbelsäule abzutrennen. Derartige Verfahren und Vorrichtungen sind z.B. aus der DE-1454089 A1 oder der DE 2946042 B1 bekannt. Das bedeutet jedoch, dass die Pinbones nachträglich in einem separaten Arbeitsgang entfernt, insbesondere gezogen werden müssen. Dies erfolgt bekanntermaßen durch nach geordnete Maschinen, spezielle Handhabungsgeräte oder aber manuell. Nach dem eigentlichen Filetieren müssen die Pinbones vorzugsweise in Richtung ihres Wuchses aus dem Filet gezogen werden, um einer Zerstörung der Filetstruktur vorzubeugen. Je frischer der Fisch ist, desto fester sind die Pinbones in der Fleischstruktur verwachsen, lassen sich also schwerer entfernen. Um mit bekannten manuellen oder maschinellen Vorrichtungen ein verwertbares Ergebnis bei der Pinboneentfernung zu erzielen, werden die Fische nach dem Töten und Schlachten etwa 4 Tage gelagert, also bis zur Überwindung der Totenstarre, bevor der eigentliche Vorgang der Pinboneentfernung mittels Zangen oder dergleichen beginnen kann. Dies hat jedoch zum einen den Nachteil, dass der Fisch nicht mehr die vom Markt geforderte Frische aufweist. Zum anderen verursacht die Zwischenlagerung der Fische einen hohen Lager- und Kühlaufwand. Ein weiterer Nachteil besteht darin, dass das Ergebnis der Pinboneentfernung nicht zufriedenstellend ist. Mit anderen Worten verbleiben zu viele Pinbones im Fleisch. Des weiteren leidet auch die Qualität des Filetfleisches, da die Filets zusätzlichen Transportwegen und nachgeschalteten Arbeitsschritte ausgesetzt sind, was im übrigen auch ein Hygieneproblem darstellt.

Eine weitere Vorrichtung mit den geschilderten Nachteilen ist der US 5,911,621 zu entnehmen. Die darin beschriebene Vorrichtung zum Entfernen von Pinbones weist eine Zylinderwalze auf. Dieser Zylinderwalze ist eine Platte zur Bildung eines Pinbone-Aufnahmespaltes zugeordnet. Die Mantelfläche der Zylinderwalze selbst ist mit Öffnungen zur Aufnahme der aus einem Filet hervorstehenden Pinbones versehen. Durch Rotation der Zylinderwalze werden die im Spalt zwischen Zylinderwalze und Platte sowie in den Öffnungen befindlichen Pinbones aus dem Filet gezogen.

Aufgabe der vorliegenden Erfindung ist es daher, eine Vorrichtung zu schaffen, die das zuverlässige Entfernen von Fleischgräten aus Fischfilets insbesondere auch vor oder während der Totenstarre gewährleistet. Des weiteren ist es Aufgabe der vorliegenden Erfindung, ein zuverlässiges Verfahren zum Entfernen von Fleischgräten aus Fischfilets vor und während der Totenstarre vorzuschlagen.

Diese Aufgabe wird zum einen durch eine Vorrichtung der eingangs genannten Art dadurch gelöst, dass das Element zum Lösen und Entfernen der Fleischgräten ein Saugelement ist. Dadurch ist eine dosierte Belastung auf die Fleischgräte aufbringbar, die einerseits ausreicht, um die Fleischgräte aus dem Filetfleisch zu schälen bzw. zu trennen sowie von der Haut zu lösen, und andererseits das Filetfleisch schont, so dass die Filetstruktur unbeeinträchtigt bleibt. Eine solche Vorrichtung bzw.

Handhabungsvorrichtung ist daher auch geeignet, Fleischgräten bei Fisch unmittelbar nach dessen Schlachtung zuverlässig aus dem Fischfilet zu entfernen.

Vorzugsweise ist das Saugelement schlauchartig und mindestens teilweise flexibel ausgebildet. Mit dem flexiblen Abschnitt besteht die Möglichkeit, dass sich das Saugelement eng an die Fleischgräten anschmiegt, so dass eine besonders effektive Übertragung der Zugkraft gewährleistet ist. Des weiteren ermöglicht die erfindungsgemäße Ausbildung ein Nachführen des Saugelementes entsprechend der Kontur und Lage/Position der Fleischgräten bis an die Wirbelsäule heran.

In einer vorteilhaften Weiterbildung der Erfindung ist das Saugelement rotierend antreibbar. Durch die Rotation des Saugelementes ist ein Bohreffekt erzielbar, der ein zuverlässiges Schälen der Fleischgräten aus ihrer Umgebung ermöglicht. Mit anderen Worten löst das rotierende Saugelement die Fleischgräten zuverlässig vom sie umgebenden Fleisch.

In einer besonders bevorzugten Ausführungsform verfügt die Vorrichtung über ein Kameraelement zum Aufnehmen spezifischer Daten für jedes zu bearbeitende Fischfilet und eine Auswerteeinheit zum Ermitteln der exakten Position der Fleischgräten in dem Fischfilet. Dadurch ist eine automatisierte Entfernung der Fleischgräten gewährleistet. Die Vorrichtung kann dann in den ohnehin automatisierten Bearbeitungsprozeß integriert werden, so daß der bisher notwendige Personaleinsatz reduziert werden kann.

Zum anderen wird die Aufgabe durch ein Verfahren mit den eingangs genannten Schritten dadurch gelöst, daß die Fleischgräten durch Aufbringen von Vakuum vom Fischfilet gelöst und aus diesem gezogen werden. Dadurch lassen sich Fleischgräten selbst aus Fischfilets von gerade geschlachtetem Fisch, also von Fischen vor oder während der Totenstarre, entfernen. Das Vakuum schafft eine Ausgewogenheit zwischen erforderlicher Kraft zum Lösen der Fleischgräten aus dem Fleisch und von der Haut einerseits und schonender Behandlung des Filets andererseits.

Vorzugsweise werden spezifische Daten jedes Fischfilets mittels eines Kameraelementes aufgenommen und mittels einer Auswerteeinheit die aufgenommenen Daten ausgewertet und die exakte Position der Fleischgräten in dem Fischfilet ermittelt. Mit dieser Schrittfolge können Fleischgräten automatisch quasi on-line zuverlässig aus dem Filetfleisch entfernt werden, ohne die Struktur des Filetfleisches zu zerstören.

Weitere bevorzugte und vorteilhafte Merkmale sowie Verfahrensschritte ergeben sich aus den Unteransprüchen und der Beschreibung. Eine besonders bevorzugte Ausführungsform sowie das Verfahren werden anhand der beigefügten Zeichnung näher erläutert. In der Zeichnung zeigt:
- Fig. 1: eine schematische Darstellung eines Fischfilets mit Fleischgräten,
- Fig. 2: eine schematische Darstellung von relevanten Teilen einer ersten Ausführungsform der erfindungsgemäßen Vorrichtung im Schnitt, nämlich des Saugelementes oberhalb eines Fischfilets,
- Fig. 3: eine schematische Darstellung einer weiteren Ausführungsform des Saugelementes im Schnitt, und
- Fig. 4 a+b: Detailansichten unterschiedlicher Ausführungen des freien Endes bzw. der Kontaktfläche des Saugelementes zum Fischfilet.

Die gezeigten Vorrichtungen bzw. Teile derselben dienen zum Entfernen von Fleischgräten aus einem Fischfilet. Die Vorrichtungen können einfache Handhabungsvorrichtungen für das manuelle Entfernen oder auch automatisierte Vorrichtungen für die Linienproduktion sein.

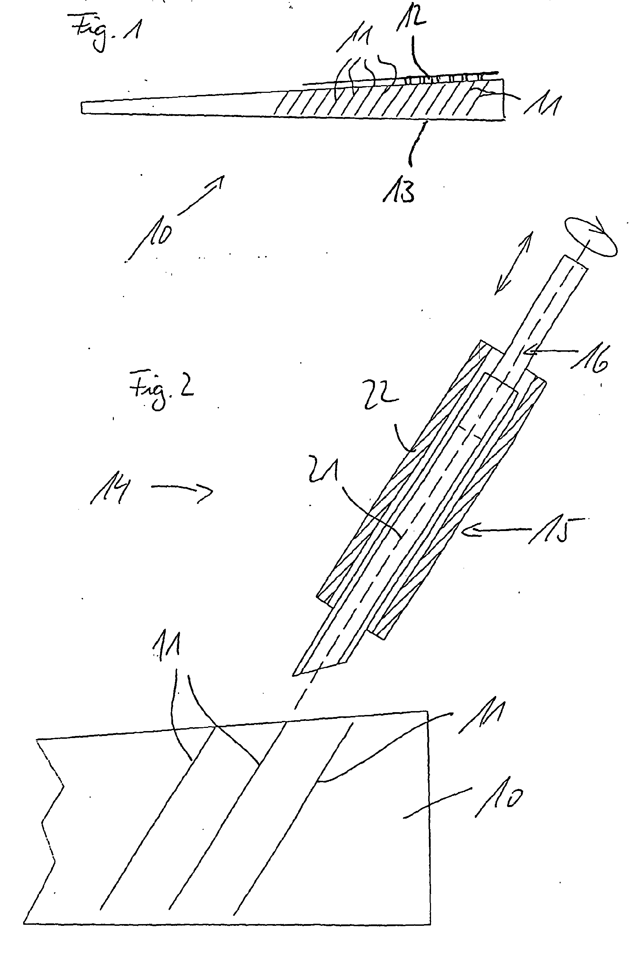

Zum besseren Verständnis ist in Figur 1 zunächst ein Ausschnitt eines Fischfilets 10 beschrieben, das Fleischgräten 11 beinhaltet. Die auch als Pinbones bezeichneten Fleischgräten 11 sind Nervenbeine, die sich von der Wirbelsäule 12 zur Seitenlinie 13 des Fisches erstrecken. Pro Wirbel existiert üblicherweise ein Paar Fleischgräten, wobei sich von den beiden Fleischgräten 11 eines Paares jeweils eine Fleischgräte 11 zur rechten und zur linken Seitenlinie 13 erstreckt. Die Fleischgräten 11 verlaufen von der Wirbelsäule 12 aus gesehen schräg nach oben in den Rücken und schräg nach hinten zum Schwanz.

Die Vorrichtung 14 zum Entfernen der Fleischgräten 11, die sich üblicherweise in einem vom Fischkörper bereits teilweise oder vollständig gelösten Fischfilet 10 befinden, kann als manuelle Handhabungsvorrichtung oder als automatisierte Vorrichtung vorzugsweise als Bestandteil einer Produktionslinie zur Fischverarbeitung ausgebildet sein. Bevorzugt ist jedoch eine Vorrichtung zum automatisierten Entfernen der Fleischgräten 11. Die Vorrichtung 14 besteht als Handhabungsvorrichtung zum manuellen Entfernen der Fleischgräten 11 gemäß Figur 2 im wesentlichen aus einem Element 15 zum Lösen und Entfernen der Fleischgräten 11. Das Element 15 ist als Saugelement 16 ausgebildet. Die Vorrichtung 14 ist auch geeignet, Fleischgräten 11 aus einem noch am Fischkörper befindlichen Fischfilet 10 zu entfernen. Als Vorrichtung 14 zum automatisierten Entfernen verfügt die Vorrichtung 14 zusätzlich über ein (nicht dargestelltes) Kameraelement und eine (ebenfalls nicht dargestellte) Auswerteeinheit. Vorrichtung 14, Kameraelement und Auswerteeinheit stehen in diesem Falle in Wirkverbindung miteinander.

Das Saugelement 16 ist schlauchartig ausgebildet und weist einen festen, formstabilen, steifen Abschnitt 17 und einen flexiblen Abschnitt 18 auf. Alternativ kann das Saugelement 16 auch vollständig fest oder flexibel ausgebildet sein. Der flexible Abschnitt 18 ist am freien Ende 19 des Saugelementes 16 auf der dem Fischfilet 10 zugewandten Seite ausgebildet. Der flexible Abschnitt 18 weist eine ausgewogene Elastizität auf, das bedeutet, daß er einerseits eine ausreichende Festigkeit bzw. Steifigkeit aufweist, um in das Fleisch einzudringen, ohne umgelenkt bzw. umgeknickt zu werden. Andererseits ist er ausreichend flexibel ausgebildet, um dem Wuchs und der Position der Fleischgräten 11 zu folgen.

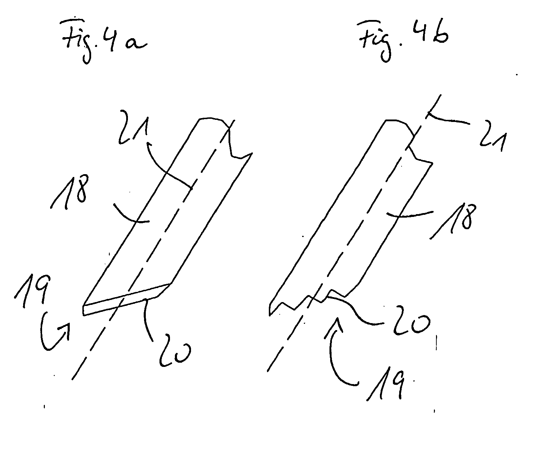

Der flexible Abschnitt 18 ist hohl ausgebildet und weist eine abgeschrägte Kontaktfläche 20 auf. Die am freien Ende 19 ausgebildete Kontaktfläche 20 dient zum Aufsetzen des Saugelementes 16 auf dem Fischfilet 10. Das Saugelement 16 ist derart zum Fischfilet 10 bzw. zu den Fleischgräten 11 ausgerichtet, daß die Mittelachse 21 etwa fluchtend zu den Fleischgräten 11 verläuft. Wie aus den Figuren 4 a+b zu entnehmen ist, kann die Gestalt und Ausbildung der Kontaktfläche 20 variieren. Sie kann glatt, gefast, gezackt, gewellt oder anderweitig geformt ausgebildet sein.

An den flexiblen Abschnitt 18 schließt sich in einem Abstand vom freien Ende 19 bzw. der Kontaktfläche 20 der feste Abschnitt 17 an. Der feste Abschnitt 17 ist ebenfalls hohl ausgebildet und entweder über den flexiblen Abschnitt 18 gestülpt oder in diesen eingesteckt. Flexibler und fester Abschnitt 18 und 17 können auch einstückig miteinander verbunden bzw. ausgebildet sein. Das aus dem flexiblen Abschnitt 18 und dem festen Abschnitt 17 gebildete Saugelement 16 ist rotierend antreibbar. Der (nicht gezeigte) Antrieb gewährleistet eine Rotation in entgegengesetzte Richtungen, also im Uhrzeigersinn oder entgegen dem Uhrezigersinn. Insbesondere zur Führung des Saugelementes 16 ist dieses mindestens teilweise von einer Hülse 22 umgeben. Die Hülse 22 ist starr ausgebildet und gegen eine Verdrehung relativ zum Saugelement 16 gesichert. Die Einheit aus Saugelement 16 und Hülse 22 ist in linearer Richtung, nämlich in Richtung der Mittelachse 21 zur Ausführung einer Zustell- und Rückzugsbewegung vor- und zurückbewegbar.

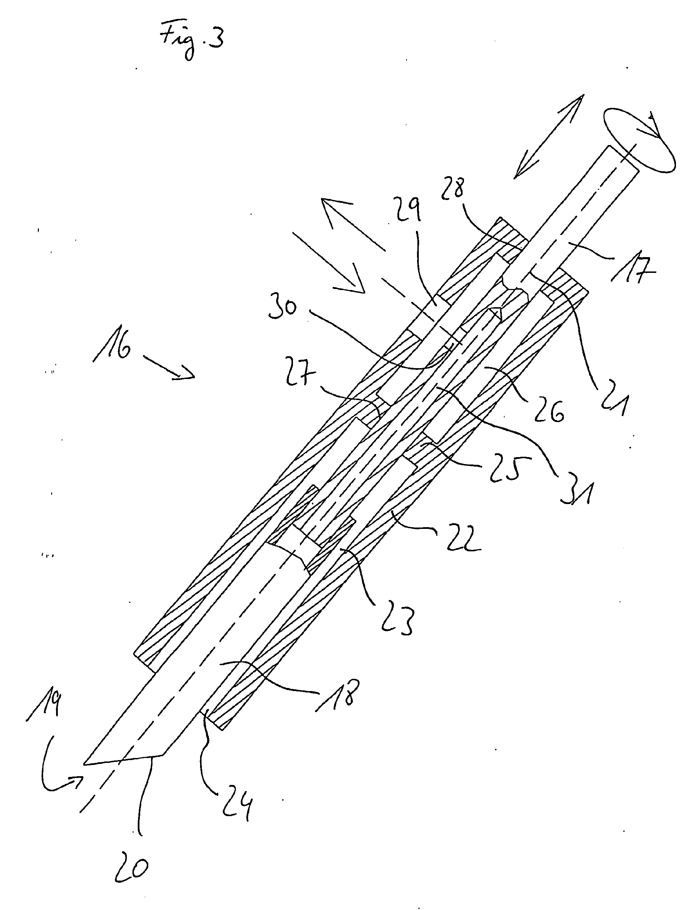

In der Ausführungsform gemäß Figur 3 ist die Hülse 22 mit einer Doppelkammer ausgebildet. Eine Kammer 23, nämlich die dem freien Ende 19 zugewandte untere Kammer 23, weist eine Öffnung 24 auf, so daß die Kammer 23 zur Kontaktfläche 20 hin geöffnet ist. Durch einen Steg 25, der der Öffnung 24 gegenüberliegt, ist die Kammer 23 von einer zweiten oberen Kammer 26 getrennt. Der Steg 25 weist eine Öffnung 27 zum Durchtritt des Saugelementes 16 auf, ist aber gegenüber dem Saugelement 16 abgedichtet. Die obere Kammer 26 ist im wesentlichen geschlossen ausgebildet. Eine Öffnung 28 zum Durchtritt des Saugelementes 16 ist gegenüber letzterem dichtend ausgebildet. Eine weitere Öffnung 29 dient zum Anschluß von (nicht dargestellten) Leitungen zum Erzeugen eines Vakuums bzw. zum Einbringen von Druckluft in das Saugelement 16. Das Saugelement 16 weist hierzu ebenfalls eine Öffnung 30 auf. Die Öffnung 30 dient zur Herstellung einer Verbindung zwischen der Kammer 26 und einer Bohrung 31 des als Welle ausgebildeten festen Abschnitts 17. Die Bohrung 31 mündet in den flexiblen Abschnitt 18, so daß von den (nicht gezeigten) Leitungen eine direkte Verbindung durch das Saugelement 16 an die Atmosphäre existiert.

Im folgenden wird das automatisierte Verfahren anhand der Figur 3 mit den bevorzugten Verfahrensschritten näher erläutert:
Mit dem Kameraelement wird das Fischfilet 10 erfaßt und registriert. Das bedeutet, daß das Kameraelement mindestens eine, vorzugsweise jedoch mehrere Aufnahmen vom Fischfilet 10 macht, um das Fischfilet 10 selbst und die Lage und Position der Fleischgräten 11 zu erfassen. Die aufgenommenen Bilder werden mittels der Auswerteeinheit ausgewertet, mit dem Ergebnis, daß die Lage der einzelnen Fleischgräten 11 bzw. deren Schnittflächen bekannt ist. Auf die lokalisierten Fleischgräten 11 senkt sich dann das Saugelement 16 ab. Die Kontaktfläche 20 setzt oberhalb einer Fleischgräte 11 auf. Das Saugelement 16 bzw. der rotierende flexible Abschnitt 18 desselben wird dann in Wuchsrichtung der Fleischgräte 11 über diese gestülpt. Die Hülse 22 dient dabei als Führung. Der flexible Abschnitt 18 wird weiter zugestellt, wodurch die Fleischgräte 11 aus seiner Umgebung, nämlich dem Filetfleisch, gebohrt bzw. geschält wird. Durch die flexible Ausführung des Abschnitts 18 folgt derselbe dem z.T. gekrümmten Wuchs bzw. der variablen Lage der Fleischgräte 11. Gleichzeitig oder zeitversetzt zur Bohrbewegung wird optional ein Vakuum an das Saugelement 16 angelegt. Zum einen unterstützt das Vakuum die Aufnahme der Fleischgräte 11 in den flexiblen Abschnitt 18. Zum anderen wird durch das Vakuum der Querschnitt des flexiblen Abschnitts 18 verringert, so daß sich der Abschnitt 18 mindestens teilweise an die Fleischgräte 11 anschmiegt. Mit zunehmender Eintauchtiefe des Saugelementes 16 in das Fischfilet 10 kann das Vakuum erhöht werden. Das Maximum des Vakuum ist erreicht, wenn die Kontaktfläche 20 nahe der Seitenlinie 13 (also der Hautseite) oder alternativ nahe der Wirbelsäule 12 angekommen ist. Durch Zurückziehen des Saugelementes 16 bzw. des flexiblen Abschnitts 18 entgegen der Zustellrichtung bei anhaltendem Vakuum wird die Fleischgräte 11 von der Haut bzw. der Wirbelsäule 12 gelöst, je nachdem, von welcher Seite des Fischfilets 10 die Fleischgräte 11 gezogen wird. Sobald die Fleischgräte 11 vollständig aus dem Fischfilet 10 gezogen ist, wird das Vakuum durch Druckluft ersetzt, so daß die in dem Saugelement 16 befindliche Fleischgräte 11 ausgestoßen wird. Damit ist das Saugelement 16 wieder zur Aufnahme einer nächsten Fleischgräte 11 frei. Das manuelle Verfahren verläuft prinzipiell ähnlich, mit dem Unterschied, daß das Erkennen der Fleischgräte durch eine Bedienperson vorgenommen wird, die dann die Vorrichtung 14 manuell an die zu entfernende Fleischgräte 11 führt.

Das Ergebnis des Ziehens der Fleischgräten 11 in der geschilderten Weise ist ein perforiertes Fischfilet 10. Durch Streichen über das perforierte Fischfilet 10 sind die Bohrungen, in denen zuvor die Fleischgräten 11 gesteckt haben, zu schließen. Dieses Streichen kann mit der Hand, aber auch automatisch mit entsprechenden und den Saugelementen 16 nachgeordneten Bürstenelementen oder dergleichen erfolgen. Es besteht auch die Möglichkeit, die Bohrungen z.B. mit Fischfarce zu füllen, indem es in die Bohrungen injiziert wird.

## Patentansprüche

1. Vorrichtung zum Entfernen von Fleischgräten (11) aus einem Fischfilet (10), im wesentlichen umfassend mindestens ein Element (15) zum Lösen und vollständigen Entfernen der Fleischgräten (11) aus dem Fischfilet (10), **dadurch gekennzeichnet, daß** das Element (15) zum Lösen und Entfernen der Fleischgräten (11) ein Saugelement (16) ist.

2. Vorrichtung nach Anspruch 1, **dadurch gekennzeichnet, daß** das Saugelement (16) schlauchartig und mindestens teilweise flexibel ausgebildet ist.

3. Vorrichtung nach Anspruch 1 oder 2, **dadurch gekennzeichnet, daß** das Saugelement (16) einen flexiblen Abschnitt (18) und einen festen Abschnitt (17) aufweist.

4. Vorrichtung nach einem der Ansprüche 1 bis 3, **dadurch gekennzeichnet, daß** das Saugelement (16) mindestens teilweise von einer Hülse (22) umgeben ist.

5. Vorrichtung nach einem der Ansprüche 1 bis 4, **dadurch gekennzeichnet, daß** das Saugelement (16) an einem freien, dem Fischfilet (10) zugewandten Ende (19) zur Bildung einer Kontaktfläche (20) abgeschrägt ausgebildet ist.

6. Vorrichtung nach Anspruch 5, **dadurch gekennzeichnet, daß** die schräge Kontaktfläche (20) wahlweise glatt oder uneben ausgebildet ist.

7. Vorrichtung nach einem der Ansprüche 3 bis 6, **dadurch gekennzeichnet, daß** das Saugelement (16) bzw. der flexible Abschnitt (18) rotierend antreibbar ist.

8. Vorrichtung nach einem der Ansprüche 3 bis 7, **dadurch gekennzeichnet, daß** das Saugelemente (16) im Bereich des flexiblen Abschnitts (18) hohl und im Bereich des festen Abschnitts (17) mindestens teilweise hohl ausgebildet ist.

9. Vorrichtung nach einem der Ansprüche 4 bis 8, **dadurch gekennzeichnet, daß** die Hülse (22) mindestens zwei Kammern (23, 26) aufweist, die gegeneinander dichtend ausgebildet sind.

10. Vorrichtung nach Anspruch 9, **dadurch gekennzeichnet, daß** eine Verbindung zwischen der Umgebung und der Kammer (26) einerseits und der Kammer (26) und dem in dem festen Abschnitt (17) befindlichen Hohlraum andererseits existiert.

11. Vorrichtung nach Anspruch 9 oder 10, **dadurch gekennzeichnet, daß** der Hohlraum des festen Abschnitts (17) über die Kammer (26) an ein Pumpenelement angeschlossen ist.

12. Vorrichtung nach Anspruch 11, **dadurch gekennzeichnet, daß** das Pumpenelement an eine Steuerungs- und/oder Regelungseinheit angeschlossen ist.

13. Vorrichtung nach einem der Ansprüche 1 bis 12, **dadurch gekennzeichnet, daß** sie zum automatisierten Entfernen der Fleischgräten (11) zusätzlich über ein Kameraelement zum Aufnehmen spezifischer Daten für jedes zu bearbeitende Fischfilet (10) und eine Auswerteeinheit zum Ermitteln der exakten Position der Fleischgräten (11) in dem Fischfilet (10) verfügt.

14. Vorrichtung nach Anspruch 13, **dadurch gekennzeichnet, daß** sie integraler Bestandteil einer Fischverarbeitungslinie ist.

15. Verfahren zum Entfernen von Fleischgräten (11) aus einem Fischfilet (10) durch Lösen und vollständiges Entfernen der Fleischgräten (11) aus dem Fischfilet (10), **dadurch gekennzeichnet, daß** die Fleischgräten (11) durch Aufbringen von Vakuum vom Fischfilet (10) gelöst und aus diesem gezogen werden.

16. Verfahren nach Anspruch 15, **dadurch gekennzeichnet, daß** ein Saugelement (16) über jede Fleischgräte (11) in Wuchsrichtung gestülpt wird.

17. Verfahren nach Anspruch 16, **dadurch gekennzeichnet, daß** das Saugelement (16) bzw. ein flexibler Abschnitt (18) desselben bei der Zustellbewegung in Richtung des Fischfilets (10) gleichzeitig rotiert.

18. Verfahren nach Anspruch 16 oder 17, **dadurch gekennzeichnet, daß** die Aufnahme der Fleischgräten (11) in das Saugelement (16) durch Vakuum unterstützt wird.

19. Verfahren nach Anspruch 18, **dadurch gekennzeichnet, daß** das Vakuum mit zunehmender Eintauchtiefe in das Filetfleisch erhöht wird.

20. Verfahren nach einem der Ansprüche 15 bis 19, **dadurch gekennzeichnet, daß** zum automatischen Entfernen der Fleischgräten (11) spezifische Daten jedes Fischfilets (10) mittels eines Kameraelementes aufgenommen und mittels einer Auswerteeinheit die aufgenommenen Daten ausgewertet und die exakte Position der Fleischgräten (11) in dem Fischfilet (10) ermittelt werden.

21. Verfahren nach einem der Ansprüche 16 bis 20, **dadurch gekennzeichnet, daß** das Saugelement (16) nach dem Herausziehen der Fleischgräte (11) mit Druckluft beaufschlagt wird, so daß die gelöste und aus dem Fischfilet (10) gezogene Fleischgräte (11) aus dem Saugelement (16) geblasen wird.

22. Verfahren nach einem der Ansprüche 15 bis 21, **dadurch gekennzeichnet, daß** die durch das Ziehen der Fleischgräten (11) entstehenden Bohrungen geschlossen werden, indem mit Kontakt über das Filetfleisch gestrichen wird.

23. Verfahren nach einem der Ansprüche 15 bis 21, **dadurch gekennzeichnet, daß** die durch das Ziehen der Fleischgräten (11) entstehenden Bohrungen durch Injektion von Fischfarce oder dergleichen geschlossen werden.

## Claims

1. Apparatus for removing pinbones (11) from a fish fillet (10), essentially comprising at least one element (15) for detaching and completely removing the pinbones (11) from the fish fillet (10), **characterised in that** the element (15) for detaching and removing pinbones (11) is a suction element (16).

2. Apparatus according to claim 1, **characterised in that** the suction element (16) is hose-like and at least partially flexible.

3. Apparatus according to claim 1 or 2, **characterised in that** the suction element (16) has a flexible section (18) and a fixed section (17).

4. Apparatus according to any one of claims 1 to 3, **characterised in that** the suction element (16) is at least partially surrounded by a sleeve (22).

5. Apparatus according to any one of claims 1 to 4, **characterised in that** the suction element (16) is bevelled at a free end (19) facing towards the fish fillet (10) for forming a contact face (20).

6. Apparatus according to claim 5, **characterised in that** the sloping contact face (20) is optionally smooth or uneven.

7. Apparatus according to any one of claims 3 to 6, **characterised in that** the suction element (16) or the flexible section (18) can be driven in rotation.

8. Apparatus according to any one of claims 3 to 7, **characterised in that** the suction element (16) is hollow in the region of the flexible section (18) and at least partially hollow in the region of the fixed section (17).

9. Apparatus according to any one of claims 4 to 8, **characterised in that** the sleeve (22) has at least two chambers (23, 26) which seal off from each other.

10. Apparatus according to claim 9, **characterised in that** there is a connection between the environment and the chamber (26) on the one hand and the chamber (26) and the cavity located in the fixed section (17) on the other hand.

11. Apparatus according to claim 9 or 10, **characterised in that** the cavity of the fixed section (17) is connected by the chamber (26) to a pump element.

12. Apparatus according to claim 11, **characterised in that** the pump element is connected to a control and/or regulating unit.

13. Apparatus according to any one of claims 1 to 12, **characterised in that** for automated removal of the pinbones (11) it has in addition a camera element for recording specific data for each fish fillet (10) to be processed, and an evaluating unit for determining the exact position of the pinbones (11) in the fish fillet (10).

14. Apparatus according to claim 13, **characterised in that** it is an integral part of a fish processing line.

15. Method for removing pinbones (11) from a fish fillet (10) by detaching and completely removing the pinbones (11) from the fish fillet (10), **characterised in that** the pinbones (11) are detached from the fish fillet (10) and pulled out of it by applying a vacuum.

16. Method according to claim 15, **characterised in that** a suction element (16) is inverted over each pinbone (11) in the direction of growth.

17. Method according to claim 16, **characterised in that** the suction element (16) or a flexible section (18) thereof rotates at the same time as the delivery movement in the direction of the fish fillet (10).

18. Method according to claim 16 or 17, **characterised in that** reception of the pinbones (11) in the suction element (16) is assisted by a vacuum.

19. Method according to claim 18, **characterised in that** the vacuum is increased with increasing depth of penetration into the fillet flesh.

20. Method according to any one of claims 15 to 19, **characterised in that**, for automatic removal of the pinbones (11), specific data of each fish fillet (10) are recorded by means of a camera element, and by means of an evaluating unit the recorded data are evaluated and the exact position of the pinbones (11) in the fish fillet (10) is determined.

21. Method according to any one of claims 16 to 20, **characterised in that**, after the pinbone (11) is pulled out, the suction element (16) admits compressed air so that the pinbone (11) which has been detached and pulled out of the fish fillet (10) is blown out of the suction element (16).

22. Method according to any one of claims 15 to 21, **characterised in that** the bores produced by pulling out the pinbones (11) are closed by brushing over the fillet flesh with contact.

23. Method according to any one of claims 15 to 21, **characterised in that** the bores produced by pulling out the pinbones (11) arc closed by injection offish stuffing or the like.

## Revendications

1. Dispositif pour enlever les arêtes (11) d'un filet (10) de poisson, comprenant pour l'essentiel au moins un élément (15) pour détacher et enlever complètement les arêtes (11) d'un filet (10) de poisson, **caractérisé en ce que** l'élément (15) pour détacher et enlever les arêtes (11) est un élément aspirant (16).

2. Dispositif selon la revendication 1, **caractérisé en ce que** l'élément aspirant (16) est tubulaire et au moins en partie flexible.

3. Dispositif selon la revendication 1 ou 2, **caractérisé en ce que** l'élément aspirant (16) présente un tronçon flexible (18) et un tronçon rigide (17).

4. Dispositif selon l'une des revendications 1 à 3, **caractérisé en ce que** l'élément aspirant (16) est entouré au moins en partie d'une gaine (22).

5. Dispositif selon l'une des revendications 1 à 4, **caractérisé en ce que** l'élément aspirant (16) est conçu en biseau à une extrémité libre (19) tournée vers le filet (10) de poisson pour former une face (20) de contact.

6. Dispositif selon la revendication 5, **caractérisé en ce que** la face (20) de contact biseautée est au choix lisse ou irrégulière.

7. Dispositif selon l'une des revendications 3 à 6, **caractérisé en ce que** l'élément aspirant (16) ou le tronçon flexible (18) peut être entraîné en rotation.

8. Dispositif selon l'une des revendications 3 à 7, **caractérisé en ce que** l'élément aspirant (16) est creux dans la zone du tronçon flexible (18) et au moins en partie creux dans la zone du tronçon rigide (17).

9. Dispositif selon l'une des revendications 4 à 8, **caractérisé en ce que** la gaine (22) présente au moins deux chambres (23, 26) qui sont étanches l'une par rapport à l'autre.

10. Dispositif selon la revendication 9, **caractérisé en ce qu'**une liaison existe entre l'entourage et la chambre (26) d'une part et entre la chambre (26) et la cavité qui se trouve dans le tronçon rigide (17) d'autre part.

11. Dispositif selon la revendication 9 ou 10, **caractérisé en ce que** la cavité du tronçon rigide (17) est reliée via la chambre (26) à un élément pompant.

12. Dispositif selon la revendication 11, **caractérisé en ce que** l'élément pompant est relié à une unité de commande et/ou de réglage.

13. Dispositif selon l'une des revendications 1 à 12, **caractérisé en ce que** qu'il dispose en plus d'un élément à caméra pour recueillir les données spécifiques de chaque filet (10) de poisson à traiter et une unité d'évaluation pour calculer la position exacte des arêtes (11) dans le filet (10) de poisson, afin d'en enlever automatiquement les arêtes (11).

14. Dispositif selon la revendication 13, **caractérisé en ce qu'**il fait partie intégrante d'une ligne de traitement de poisson.

15. Procédé pour enlever les arêtes (11) d'un filet (10) de poisson par détachement et enlèvement complet des arêtes (11) du filet (10) de poisson, **caractérisé en ce que** les arêtes (11) sont détachées puis retirées de celui-ci par une mise sous vide du filet (10) de poisson.

16. Procédé selon la revendication 15, **caractérisé en ce qu'**un élément aspirant (16) est placé dans le sens de la forme au-dessus de chaque arête (11).

17. Procédé selon la revendication 16, **caractérisé en ce que** l'élément aspirant (16) ou un tronçon flexible (18) de celui-ci tourne en même temps dans le sens du filet (10) de poisson lors du mouvement d'amenée.

18. Procédé selon la revendication 16 ou 17, **caractérisé en ce que** le recueillement des arêtes (11) dans l'élément aspirant (16) est assisté par le vide.

19. Procédé selon la revendication 18, **caractérisé en ce que** le vide grandit à mesure que la profondeur de pénétration augmente dans le filet de poisson.

20. Procédé selon l'une des revendications 15 à 19, **caractérisé en ce que** les données spécifiques de chaque filet (10) de poisson sont recueillies au moyen d'un élément à caméra, les données recueillies sont évaluées au moyen d'un élément d'évaluation et la position exacte des arêtes (11) dans le filet (10) de poisson est calculée, afin d'en enlever automatiquement les arêtes (11).

21. Procédé selon l'une des revendications 16 à 20, **caractérisé en ce que** l'élément aspirant (16) est soumis après retrait de l'arête (11) à de l'air comprimé, de sorte que l'arête (11) détachée puis retirée du filet (10) de poisson soit soufflée hors de l'élément aspirant (16).

22. Procédé selon l'une des revendications 15 à 21, **caractérisé en ce que** les trous générés par le retrait des arêtes (11) sont bouchés en lissant par contact le filet de poisson.

23. Procédé selon l'une des revendications 15 à 21, **caractérisé en ce que** les trous générés par le retrait des arêtes (11) sont bouchés par une injection de farce de poisson ou similaire.
